# EUROPÄISCHE PATENTSCHRIFT

(11) **EP 0 826 704 B1**
(45) Veröffentlichungstag und Bekanntmachung des Hinweises auf die Patenterteilung: **27.11.2002**
(21) Anmeldenummer: 97113942.3
(22) Anmeldetag: 13.08.1997
(51) Int. Cl.: C08F 212/08, C08F 257/02, B01J 39/20

(54) **Verfahren zur Herstellung vernetzter Polymerisate**
Process for the preparation of crosslinked polymers
Procédé de préparation de polymères réticulés

(30) Priorität: 26.08.1996 DE 19634393
(43) Veröffentlichungstag der Anmeldung: 04.03.1998
(73) Patentinhaber: BAYER AG, 51368 Leverkusen (DE)
(72) Erfinder: Bloodworth, Robert, Dr., 51061 Köln (DE); Strüver, Werner, Dr., 51375 Leverkusen (DE); Lütjens, Holger, Dr., 51065 Köln (DE); Halle, Olaf, Dr., 51061 Köln (DE); Podszun, Wolfgang, Dr., 51061 Köln (DE)

(56) Entgegenhaltungen:
- EP-A- 0 046 535
- WO-A-85/04885
- US-A- 4 582 859
- US-A- 5 231 115

## Beschreibung

Die Erfindung betrifft ein Verfahren zur Herstellung vernetzter Polymerisate durch Quellung kleinerer Polymerisatteilchen (vorzugsweise Perlpolymerisatteilchen) mit copolymerisierbaren Monomeren und Polymerisation derselben.

In jüngerer Zeit haben Ionenaustauscher mit möglichst einheitlicher Teilchengröße (nachfolgend "monodispers" genannt) zunehmend an Bedeutung gewonnen, weil bei vielen Anwendungen aufgrund der günstigeren hydrodynamischen Eigenschaften eines Austauscherbettes aus monodispersen Ionenaustauschern wirtschaftliche Vorteile erzielt werden können, vgl. EP-PS 46 535 und 51 210. Nach den Verfahren beider genannten Druckschriften entstehen Teilchen, deren mittlere Größen durch die gewählten Verfahrensparameter vorprogrammiert sind.

Es ist jedoch auch möglich, die Teilchengröße solcher monodisperser Polymerisate durch ein sogenanntes seed/feed-Verfahren anzuheben, d.h. das ursprünglich erhaltene Polymerisat ("seed") mit copolymerisierbaren Monomeren anzuquellen ("feed") und dann das in das Polymerisat eingedrungene Monomer zu polymerisieren.

Nach der EP-PS 98 130 wird eine im wesentlichen polymerisierte vernetzte Saat vorgelegt; der Zulauf des Monomeren für die Quellung erfolgt unter Polymerisationsbedingungen. Eine besondere Schwierigkeit dieses Verfahrens besteht darin, daß die Menge des eingesetzten Schutzkolloids sehr kritisch ist: Zu große Mengen an Schutzkolloid verhindern das Eindringen des Monomers in die Saat, während bei zu kleinen Mengen die Agglomeration der Perlen oft nicht verhindert werden kann. Auch das Auftreten einer neuen Teilchengeneration aus nicht in die Saat eingedrungenem Monomer stellt häufig ein Problem dar, das insbesondere bei Verwendung großer Mengen an Schutzkolloid auftritt. So entspricht die Kornverteilung des erhaltenen Perlpolymerisates nicht in allen Fällen der aus der Saat errechenbaren theoretischen Kornverteilung, sondern ist im allgemeinen etwas breiter ("somewhat wider than the original seed", S. 9, Zeile 30 und Figure 1).

Gemäß EP-Patent 101 943 wird die Saat mit einer Mischung aus Monomer und Polymerisationsinitiator gequollen und anschließend ein Monomer ohne Polymerisationsinitiator unter Polymerisationsbedingungen zugesetzt. Das Ergebnis sind Ionenaustauscher mit einer Kern-Mantel-Struktur und verbesserten mechanischen Eigenschaften. Hinsichtlich der Agglomerationstendenz, dem Auftreten neuer unerwünschter Teilchengenerationen und der Breite der Kornverteilung bestehen jedoch ähnliche Einschränkungen wie im Falle der EP-PS 98 130.

Aus WO 85/04 885 ist ein Verfahren zur Herstellung von Ionenaustauschern nach der Saat-Polymerisations-Technologie bekannt, wo im Beispiel 1 6 g Gelatine und 0,3 g Natriumlaurylsulfat als Stabilisator eingesetzt werden.

Es bestand also ein Bedarf für ein robustes, breit anwendbares seed/feed-Verfahren, das die geschilderten Nachteile nicht aufweist.

Überraschenderweise wurde gefunden, dass seed/feed-Verfahren sehr einfach durchzuführen sind und nicht verklebte Perlpolymerisate mit einer Teilchengrößenverteilung liefern, die ein exaktes vergrößertes Abbild der eingesetzten Saat darstellen, wenn man als Saat ein mikroverkapseltes Polymerisat einsetzt.

Es wurde festgestellt, dass unter den Bedingungen der vorliegenden Erfindung die zugesetzte Mischung in das vorgelegte mikroverkapselte Polymerisat durch die Mikroverkapselung unbehindert eindringen kann und während der nachfolgenden Verfahrensschritte in der Saat verbleibt. Aus diesem nicht vorhersehbaren Sachverhalt ergibt sich offensichtlich ein entscheidender Vorteil gegenüber herkömmlichen seed/feed-Verfahren mit nichtverkapselter Saat: Bei einer nicht verkapselten Saat kann nämlich die eingedrungene Monomermischung bei mechanischer Beanspruchung, z.B. in Folge von Rühren oder Fördern mit einer Förderpumpe, teilweise wieder austreten und unerwünschte Effekte bei der nachfolgenden Polymerisation verursachen.

Gegenstand der Erfindung ist also ein Verfahren zur Herstellung von vemetzten Perlpolymerisaten nach dem seed/feed-Verfahren, dadurch gekennzeichnet, dass man als Saat ein mikroverkapseltes vernetztes Polymerisat einsetzt.

Das erfindungsgemäße Verfahren umfasst die folgenden Schritte:
1. Suspendieren eines mikroverkapselten vernetzten Polymerisats als Saat in einer kontinuierlichen, vorzugsweise wässrigen Phase;
2. Zusatz einer oder mehrerer Mischungen ("feed") aus Monomer, Vernetzer und gegebenenfalls Initiator und weiteren Zusätzen zu der entstandenen Saatsuspension vor oder während der Polymerisation, wobei die Mischung in die Saat eindringt.
3. Polymerisation der gequollenen Saat zu Perlpolymerisaten erhöhter Teilchengröße bei höherer Temperatur.

### Stufe 1

Das mikroverkapselte Polymerisat ist das Polymerisationsprodukt aus ethylenisch ungesättigtem polymerisierbarem Monomer und Vernetzer. Bevorzugte Monomere umfassen beispielsweise Styrol, Vinyltoluol, Ethylstyrol, α-Methylstyrol, Chlorstyrol, o-Chlormethylstyrol, m-Chlormethylstyrol, p-Chlormethylstyrol, Acrylsäure, Methacrylsäure, Acrylsäureester, Methacrylsäureester, Acrylnitril, Methacrylnitril, Acrylamid, Methacrylamid und Mischungen dieser Verbindungen. Das bevorzugteste Monomer ist Styrol; die bevorzugtesten Monomermischungen enthalten teilweise Styrol. Bevorzugte Vernetzer umfassen insbesondere Verbindungen mit 2 oder 3 copolymerisierbaren C=C-Doppelbindungen pro Molekül, wie z.B. Divinylbenzol, Divinyltoluol, Trivinylbenzol, Divinylnaphthalin, Trivinylnaphthalin, Diethylenglykoldivinylether, 1,7-Octadien, 1,5-Hexadien, Ethylenglykoldimethacrylat, Triethylenglykoldimethacrylat, Trimethylolpropantrimethacrylat, Allylmethacrylat und Methylen-N,N'-bisacrylamid. In vielen Fällen ist Divinylbenzol ein besonders gut geeigneter Vernetzer.

Durch die Menge an Vernetzer im mikroverkapselten Polymerisat wird das erreichbare seed/feed-Verhältnis maßgeblich mitbestimmt. Die richtige Einsatzmenge hängt von der Funktionalität und Effizienz des eingesetzten Vernetzers und dem angestrebten seed/feed-Verhältnis ab. Im allgemeinen liegt diese Einsatzmenge im Bereich von 0,1 bis 5,0, vorzugsweise 0,1 bis 2,0 Gew.-%, bezogen auf die Summe von Monomer und Vernetzer für das mikroverkapselte Polymerisat.

Die mittlere Teilchengröße des mikroverkapselten Polymerisats kann 5 bis 500 µm, vorzugsweise 20 bis 400 µm, besonders bevorzugt 100 bis 300 µm betragen. Die Form der Teilchengrößenverteilungskurve soll der des gewünschten Endprodudktes (Perlpolymerisat oder Ionenaustauscher) entsprechen. Zur Herstellung eines monodispersen Ionenaustauschers wird demnach ein monodisperses mikroverkapseltes Polymerisat als Saat verwendet.

Als Verkapselungsmaterial kommen die für diesen Einsatzzweck bekannten Materialien in Frage, insbesondere Polyester, Polyamide, Polyurethane, Polyharnstoffe, Gelatine und gelatinehaltige Komplexkoazervate, wie sie beispielsweise in der EP-PS 46 535 beschrieben sind. Gelatine und gelatinehaltige Komplexkoazervate sind für das erfindungsgemäße Verfahren besonders dann gut geeignet, wenn niedrige seed/feed-Verhältnisse angestrebt werden. Unter gelatinehaltigen Komplexkoazervaten im Sinne der Erfindung werden vor allem Kombinationen von Gelatine und synthetischen Polyelektrolyten verstanden. Geeignete synthetische Polyelektrolyte sind Copolymerisate mit eingebauten Einheiten von z.B. Maleinsäure, Maleinsäureanhydrid, Acrylsäure, Methacrylsäure, Acrylamid und Methacrylamid. Acrylamid- und methyacrylhaltige Copolymere können auch teilverseift sein. Gelatinehaltige Kapseln können mit üblichen Härtungsmitteln wie z.B. Formaldehyd oder Glutardialdehyd gehärtet werden. Die Herstellung des mikroverkapselten Polymerisats erfolgt zweckmäßigerweise in der Form, daß zunächst die dem Polymerisat zugrundeliegenden flüssigen Monomeren zusammen mit einem Initiator zu Flüsssigkeitströpfchen dispergiert, dann nach einem an sich bekannten Verfahren mikroverkapselt und anschließend durch Polymerisation der Monomeren zu den mikroverkapselten Polymerisaten ausgehärtet werden.

Solche bekannten Verfahren zur Mikroverkapselung sind z.B.:

### a) Die Koazervation

Bei der Koazervation bildet sich eine kolloidreiche Phase aus, die sich um das Monomer-Tröpfchen legt. Für die Verkapselung mittels Koazervation eignen sich hydrophile Kolloide wie Gelatine oder Agar-Agar. Um die Koazervation auszulösen, wird beispielsweise eine wäßrige Salzlösung zugeführt. Als Salze haben sich bei der Verwendung von Gelatine als hydrophilem Kolloid Alkalisulfate, besonders Natriumsulfat bewährt. Die Verkapselung mittels Koazervation läßt sich besonders einfach in der Weise ausführen, daß man als kontinuierliche Phase, in der die Erzeugung der Tröpfchen erfolgt, die wäßrige Lösung eines hydrophilen Kolloids wie Gelatine oder Agar-Agar wählt. Die Herstellung der Monomer-Tröpfchen wird bei Temperaturen oberhalb der Gelierungstemperatur des Kolloids vorgenommen.

An die Ausbildung der Koazervathülle schließt sich deren Verfestigung durch Abkühlen unter die Gelierungstemperatur an. Die so erzeugte Koazervat-Hülle ist zwar gegenüber Scherkräften, häufig aber nicht unter den anzuwendenden Polymerisationsbedingungen stabil. Um zu unter den anzuwendenden Polymerisationsbedingungen stabilen Hüllen zu gelangen, werden die verkapselten Teilchen einer chemischen Härtung unterworfen. Verfahren zur chemischen Härtung, z.B. die Härtung von Gelatine mit Aldehyden wie Formaldehyd, sind bekannt (s. z.B. US-PS 2 800 458). Die chemische Härtung der Teilchen kann kontinuierlich oder diskontinuierlich im gleichen oder einem anderen Reaktionsgefäß vorgenommen werden.

### b) Die Komplexkoazervation

Bei der Komplexkoazervation bildet sich eine kolloidreiche Phase aus zwei verschieden geladenen Kolloiden (Polyelektrolyten) aus, die sich um das Monomertröpfchen legt. Für die Verkapselung durch Komplexkoazervation eignen sich z.B. Systeme aus Gelatine und Gummiarabicum oder aus Gelatine und speziellen Copolymerisat-Gemischen aus einem Copolymerisat mit statistisch verteilten Resten von Acrylamid und Maleinsäure oder Maleinsäureanhydrid und einem Copolymerisat mit statistisch verteilten Resten von Acrylamid, Acrylsäure und Maleinsäure. Solche Copolymerisat-Gemische sind z.B. in der US-PS 4 181 639 als Komplex-Koazervierungskomponenten beschrieben. Um die Komplexkoazervation auszulösen, wird beispielsweise der pH-Wert der wäßrigen Phase durch Zugabe von Säuren, z.B. beim System Gelatine/Gummi arabicum, so eingestellt, daß nur einer der ursprünglich gleichsinnig geladenen Polyelektrolyte sein Ladungsvorzeichen ändert. Anschließend an die Ausbildung der Komplexkoazervathülle um das Monomer-Tröpfchen wird die Temperatur unterhalb der Gelierungstemperatur eingestellt.

Die so erzeugte Komplexkoazervat-Hülle ist zwar gegenüber Scherkräften, häufig aber nicht unter den anzuwendenden Polymerisationsbedingungen stabil. Um zu unter den anzuwendenden Polymerisationsbedingungen stabilen Hüllen zu gelangen, werden die verkapselten Teilchen meistens noch einer chemischen Härtung unterworfen. Solche Verfahren zur chemischen Härtung, z.B. zur Härtung von Gelatine enthaltenden Kapselwänden mit Aldehyden wie Formaldehyd sind bekannt (s. US-PS 2 800 457).

### c) Die Phasengrenzflächenreaktion

Bei der Verkapselung durch Phasengrenzflächenreaktion wird die das Monomer-Tröpfchen umhüllende Kapselwand dadurch gebildet, daß eine im Polymerisationsgemisch enthaltene Komponente 1 mit einer der kontinuierlichen Phase im Verkapselungsbereich zugesetzten Komponente 2 an der Phasengrenzfläche Tröpfchen/kontinuierliche Phase unter Filmbildung reagiert. Praktisch wird diese Verkapselung durch Phasengrenzflächenreaktion so ausgeführt, daß man dem Polymerisationsgemisch eine Komponente 1 zugibt, die mit diesem mischbar, mit der kontinuierlichen Phase aber weitgehend unmischbar ist. Nach Zerteilen des Polymerisationsgemisches in gleich große Tröpfchen, wobei die Tröpfchen durch ein beliebiges Suspensionshilfsmittel stabilisiert werden, bewegt sich der Tröpfchenschwarm in den Verkapselungsteil. Hier wird eine Komponente 2 zugespeist. Diese Komponente 2 ist in der kontinuierlichen Phase löslich. Komponentenpaare K₁/K₂, die an der Phasengrenzfläche unter Filmbildung reagieren, sind in großer Zahl bekannt. Beispielsweise seien die Halogenide mehrbasischer Säuren wie Sebacoylchlorid, Terephthaloylchlorid, Phosgen, mehrwertige Isocyanate, wie Toluol-2,4-diisocyanat, Hexamethylendiisocyanat, Chloride von mehrbasischen Sulfonsäuren, wie 1,3-Benzoldisulfonylchlorid, einerseits und mehrwertige Amine, wie Hexamethylendiamin, und mehrwertige Hydroxyverbindung wie Pyrogallol, Bisphenol A andererseits angeführt, die zu polymeren Carbonsäureamiden und -estern, zu Polyharnstoffen und Polyurethanen, zu polymeren Sulfonamiden und Solfonsäureestern reagieren (siehe z.B. P.G. Morgan, "Interfacial Polycondensation, A Versatile Method of Polymer Preparation", Soc. Plastics Engineers Journal" 15, 485-495). Die unterschiedliche Reaktivität der verschiedenen Komponentenpaare K₁/K₂ wird durch Einstellen der Verweildauer im Verkapselungsbereich und durch Einstellen bestimmter Temperaturen berücksichtigt. In manchen Fällen hat es sich als vorteilhaft erwiesen, die Phasengrenzflächenreaktion fördernde Substanzen, z.B. Basen bei Polykondensationsreaktionen, bei denen Säuren entstehen, mitzuverwenden. Diese Hilfsstoffe werden vorzugsweise der kontinuierlichen Phase des Verkapselungsbereiches zugesetzt.

In der EP-PS 46 535 wird ein Verfahren zur Herstellung von mikroverkapselten Perlpolymerisaten einheitlicher Teilchengröße beschrieben, die als Saat für das vorliegende Verfahren besonders gut geeignet sind.

Das mikroverkapselte Polymerisat wird in einer wäßrigen Phase suspendiert, wobei das Verhältnis von Polymerisat und Wasser ziemlich unkritisch ist. Es kann beispielsweise zwischen 2:1 und 1:20 liegen. Die Anwendung eines Hilfsmittels, z.B. eines Tensides oder eines Schutzkolloides, ist nicht notwendig. Das Suspendieren kann z.B. mit Hilfe eines normalen Rührers erfolgen.

### Stufe 2

Zu dem suspendierten mikroverkapselten Polymerisat wird eine oder mehrere Mischungen aus Monomer, Vernetzer, Initiator und gegebenenfalls weiteren Zusätzen ("feed") hinzugegeben. Bevorzugte Monomere und Vernetzer sind die oben unter "Stufe 1" genannten Verbindungen und Gemische. Die bevorzugtesten Monomeren sind Styrol sowie Mischungen aus Styrol und Comonomeren wie z.B. Acrylnitril. Die Monomeren sollen in der Wasserphase weitgehend unlöslich sein. In Wasser teilweise lösliche Monomere wie Acrylsäure, Methacrylsäure und Acrylnitril werden daher im Gemisch mit wasserunlöslichen Monomeren verwendet. Es ist auch möglich, die Löslichkeit der Monomeren in der Wasserphase durch Salzzusatz zu erniedrigen.

Die Art des Vernetzers kann im Hinblick auf die spätere Funktionalisierung ausgewählt werden. So sind beispielsweise Acrylat- bzw. Methacrylat-Vernetzer wenig geeignet, wenn ein Kationenaustauscher durch Sulfonierung hergestellt werden soll, da die Esterbindung unter den Sulfonierungsbedingungen gespalten wird. Divinylbenzol ist in vielen Fällen, insbesondere auch zur Herstellung stark saurer Kationenaustauscher, geeignet. Für die meisten Anwendungen sind kommerzielle Divinylbenzolqualitäten, die neben den Isomeren des Divinylbenzols auch Ethylvinylbenzol enthalten, ausreichend.

Für das erfindungsgemäße Verfahren geeignete Polymerisationsinitiatoren sind z.B. Peroxyverbindungen wie Dibenzoylperoxid, Dilaurylperoxid, Bis(p-chlorbenzoylperoxid), Dicyclohexylperoxydicarbonat, tert.-Butylperoctoat, 2,5-Bis(2-ethylhexanoylperoxy)-2,5-dimethylhexan und tert.-Amylperoxy-2-ethylhexan sowie Azoverbindungen wie 2,2'-Azobis(isobutyronitril) und 2,2'-Azobis(2-methylisobutyronitril). Die Initiatoren werden im allgemeinen in Mengen von 0,05 bis 2,5, vorzugsweise 0,2 bis 1,5 Gew.-%, bezogen auf die Summe aus Monomer und Vernetzer, angewendet.

Als weitere Zusätze in der Mischung können sogenannte Porogene verwendet werden, um im Polymerisat eine makroporöse Struktur zu erzeugen. Hierfür sind organische Lösungsmittel geeignet, die das gebildete Polymerisat schlecht lösen bzw. quellen. Beispielhaft seien Hexan, Octan, Isooctan, Isododecan, Methylisobutylketon und Octanol genannt.

Das Gewichtsverhältnis von vorgelegtem mikroverkapselten Polymerisat zu zugesetzter Mischung (seed/feed-Verhältnis) beträgt im allgemeinen 1:1 bis 1:20, vorzugsweise 1:2 bis 1:10, besonders bevorzugt 1:2 bis 1:8. Bei gegebener Teilchengröße des als Saat eingesetzten mikroverkapselten Polymerisats läßt sich durch das seed/feed-Verhältnis die Teilchengröße des Perlpolymerisats einstellen. Die maximale feed-Menge, die von der Saat vollständig aufgenommen wird, hängt in starkem Maße vom Vernetzergehalt der Saat ab: Mit zunehmender Vernetzung nehmen die mikroverkapselten Polymerisate immer weniger feed-Mischung auf.

Hinsichtlich der Zugabe der Mischung zur Saat gibt es keinerlei Einschränkungen. So kann die Mischung vor oder während der Polymerisation zur Saatsuspension gegeben werden. Es ist auch möglich, nacheinander Mischungen mit unterschiedlichen Zusammensetzungen zuzugeben und in das Polymerisat eindringen zu lassen. Auf diese Weise kann ein besonderer Aufbau, z.B. ein Kern-Mantel-Aufbau des Perlpolymerisats eingestellt werden. So kann beispielsweise eine erste Mischung mit Initiator und eine zweite Mischung ohne Initiator unter Polymerisationsbedingungen zugesetzt werden.

### Stufe 3

Die Polymerisation der gequollenen Saat zum Perlpolymerisat erfolgt in der Regel in Anwesenheit eines oder mehrerer Schutzkolloide und gegebenenfalls eines Puffersystems. Als Schutzkolloide sind natürliche und synthetische wasserlösliche Polymere, wie z.B. Gelatine, Stärke, Polyvinylalkohol, Polyvinylpyrrolidon, Polyacrylsäure, Polymethacrylsäure und Copolymerisate aus (Meth)acrylsäure und (Meth)acrylsäureestern bevorzugt. Sehr gut geeignet sind auch Cellulosederivate, insbesondere Celluloseether und Celluloseester, wie Methylhydroxyethylcellulose, Methylhydroxypropylcellulose, Hydroxyethylcellulose oder Carboxymethylcellulose. Die Einsatzmenge der Schutzkolloide beträgt im allgemeinen 0,02 bis 1, vorzugsweise 0,05 bis 0,3 Gew.-%, bezogen auf die Wasserphase.

Nach einer besonderen Ausführungsform der vorliegenden Erfindung wird die Polymerisation in Anwesenheit eines Puffersystem durchgeführt. Bevorzugt werden Puffersysteme, die den pH-Wert der Wasserphase bei Beginn der Polymerisation auf einen Wert zwischen 14 und 6, vorzugsweise zwischen 12 und 8 einstellen. Unter diesen Bedingungen liegen Schutzkolloide mit Carbonsäuregruppen ganz oder teilweise als Salze vor. Auf diese Weise wird die Wirkung der Schutzkolloide günstig beeinflußt. Besonders gut geeignete Puffersysteme enthalten Phosphate oder Borate. Die Begriffe Phosphat und Borat im Sinne der Erfindung umfassen auch die Kondensationsprodukte der ortho-Formen entsprechender Säuren und Salze. Die Konzentration an Phosphat bzw. Borat in der Wasserphase beträgt 0,5 bis 500, vorzugsweise 2,5 bis 100 mmol pro Liter wäßrige Phase.

Die Rührgeschwindigkeit bei der Polymerisation ist wenig kritisch und hat im Gegensatz zur herkömmlichen Suspensions-Polymerisation keinen Einfluß auf die Teilchengröße. Es werden vorzugsweise niedrige Rührgeschwindigkeiten angewendet, die ausreichen, die Mikrokapseln in Schwebe zu halten und die Abführung der Polymerisationswärme unterstützen.

Das Gewichtsverhältnis von organischer Phase zur Wasserphase beträgt bei der Polymerisation in der Regel 1:0,75 bis 1:20, vorzugsweise 1:0,75 bis 1:5. Dieses Verhältnis muß nicht zwangsläufig dem Verhältnis entsprechen, welches sich bei der Zugabe der Mischungen (feed) aus Monomer, Vernetzer und gegebenenfalls Initiator und weiteren Zusätzen zu der Saatsuspension ergibt. Es ist möglich, die Wasserphase vor oder während der Polymerisation zu verändern.

Die Polymerisationstemperatur richtet sich nach der Zerfallstemperatur des eingesetzten Initiators. Sie liegt im allgemeinen zwischen 50 und 150°C, vorzugsweise zwischen 55 und 100°C. Die Polymerisation dauert 0,5 bis einige Stunden. Es hat sich bewährt, ein Temperaturprogramm anzuwenden, bei dem die Polymerisation bei niedriger Temperatur, z.B. 60°C begonnen und mit fortschreitendem Polymerisationsumsatz die Reaktionstemperatur gesteigert wird. Auf diese Weise sichert man gleichzeitig sicheren Reaktionsverlauf und hohen Polymerisationsumsatz. Hinsichtlich der Einstellmöglichkeiten eines Temperaturprogrammes bestehen beim erfindungsgemäßen Verfahren mehr Freiheitsgrade als bei Verwendung nicht mikroverkapselter Saat, da die üblicherweise auftretenden kritischen klebrigen Übergangszustände (die zu Agglomerationen und Fehlkorn führen können) durch die Mikroverkapselung von vornherein ausgeschlossen sind.

Nach der Polymerisation kann das Polymerisat mit üblichen Methoden, z.B. durch Filtrieren oder Dekantieren, isoliert und gegebenenfalls nach ein oder mehreren Wäschen getrocknet werden.

Das Kapselmaterial befindet sich im wesentlichen auf der Oberfläche des Perlpolymerisates, d.h. die Kapselhülle "wächst" beim seed/feed-Verfahren. Sofern gewünscht, kann dieses Material durch eine Nachbehandlung entfernt werden. Gelatine und gelatinehaltige Komplexkoazervate lassen sich leicht mit Säuren oder Laugen abwaschen.

In den meisten Fällen ist es jedoch nicht notwendig, das Material der Mikroverkapselung gesondert abzuwaschen, da dieses unter den Bedingungen der Funktionalisierung des Polymerisates zu Ionenaustauschern ohnehin entfernt wird. Die Funktionalisierung des Perlpolymerisats kann nach an sich bekannten Verfahren erfolgen.

Anionenaustauscher können durch Haloalkylierung - vorzugsweise Chlormethylierung - der vernetzten Polymerisate und anschließende Aminierung hergestellt werden. Verfahren zur Haloalkylierung und Haloalkylierungsmittel sind bekannt. Ein bevorzugtes Haloalkylierungsmittel ist Chlormethylmethylether. Die Anionenaustauscher, und zwar schwach- und starkbasische, können auf bekannte Weise aus den haloalkylierten Polymerisaten hergestellt werden. Beispielsweise kann ein schwachbasischer Anionenaustauscher durch Umsetzung des haloalkylierten Polymerisats mit Ammoniak oder einem primären Amin wie Methyl- oder Ethylamin oder einem sekundären Amin wie Dimethylamin bei einer Temperatur von im allgemeinen 25 bis 150°C hergestellt werden, wobei diese Temperatur ausreichen muß, um das Aminierungsmittel mit dem Halogenatom am α-C-Atom des Aromaten reagieren zu lassen. Ähnlich lassen sich stark basische Anionenaustauscher herstellen, wobei man als Aminierungsmittel tertiäre Amine wie Trimethylamin oder Dimethylisopropanolamin verwendet.

Aus den vernetzten Polymerisaten können auch leicht Chelatharze hergestellt werden. Beispielsweise können die haloalkylierten Polymerisate aminiert und die Aminierungsprodukte mit einer geeigneten Carboxylgruppen-haltigen Verbindung wie etwa Chloressigsäure umgesetzt werden. Die haloalkylierten Polymerisate können auch direkt mit einer geeigneten Aminosäure wie etwa Iminodiessigsäure oder Glycin oder mit einem Aminopyridin wie etwa α-Picolylamin oder N-Methyl-α-picolylamin umgesetzt werden.

Stark saure Kationenaustauscher werden üblicherweise durch Sulfonierung hergestellt, wobei das vernetzte Polymerisat in einem Quellungsmittel wie einem sulfonierungsresistentem Kohlenwasserstoff (wie z.B. Chlorbenzol oder Tetrachlorethylen) oder einem aliphatischen oder aromatischen Kohlenwasserstoff (wie z.B. Toluol oder Xylol) gequollen werden kann. Bevorzugte Sulfonierungsmittel sind Schwefelsäure, Schwefeltrioxid und Chlorsulfonsäure. Das Sulfonierungsmittel wird im allgemeinen in Mengen eingesetzt, die 200 bis 700 Gew.-% des zu sulfonierenden Polymerisats betragen. Die Sulfonierung wird vorzugsweise bei Temperaturen von 50 bis 200°C durchgeführt.

Die Ionenaustauscher, die aus den erfindungsgemäß hergestellten seed/feed-Polymerisaten hergestellt werden können, zeigen günstige Austauschkinetiken und hohe Stabilitäten. Insbesondere ist die Beständigkeit gegenüber einem osmotischen Schock, die bei Anionenaustauschern häufig problematisch sind, entscheidend verbessert.

Die Prozentangaben der nachfolgenden Beispiele beziehen sich jeweils auf das Gewicht.

### Beispiele

### Beispiel 1 Herstellung eines Perlpolymerisates

3,59 g Borsäure und 0,99 g Natriumhydroxid werden in einem 4 1 Glasreaktor in 1160 ml entionisiertem Wasser gelöst. In diese Lösung werden 190,5 g eines mikroverkapselten kugelförmigen Styrolpolymerisates mit einem Gehalt an copolymerisiertem Divinylbenzol von 0,5 % als Saat (mittlere Teilchengröße 215 µm) dispergiert. Die Mikrokapselwand besteht aus einem mit Formaldehyd gehärtetem Komplexkoazervat aus Gelatine und einem Acrylamid/Acrylsäure-Copolymerisat. Danach wird innerhalb von 30 min eine Mischung aus 845 g Styrol, 48 g Acrylnitril, 116 g Divinylbenzol (80 %ig, handelsübliches Gemisch aus Divinylbenzol und Ethylbenzol) und 8 g Dibenzoylperoxid (75 %ig, handelsübliche wasserfeuchte Qualität) hinzudosiert und anschließend 1 h gerührt. Nach dieser Zeit werden 60 ml einer 2 gew.-%igen wäßrigen Methylhydroxypropylcelluloselösung hinzugefügt. Der Ansatz wird durch Temperaturerhöhung auspolymerisiert, abgekühlt, über ein 32 µm-Sieb gewaschen und getrocknet. Man erhält 1150 g eines regelmäßig geformten Perlpolymerisates einer mittleren Teilchengröße von 400 µm.

### Beispiel 2 Herstellung eines Perlpolymerisates

Analog Beispiel 1 werden 267 g Saat (wie in Beispiel 1 beschrieben, mittlere Teilchengröße 220 µm) sowie 861 g Styrol, 73 g Divinylbenzol und 7 g Dibenzoylperoxid eingesetzt. Man erhält 1150 g eines regelmäßig geformten Perlpolymerisates einer mittleren Teilchengröße von 370 µm.

### Beispiel 3 Herstellung eines Perlpolymerisates

9,3 g Dinatriumhydrogenphosphatdodekahydrat werden in einem 4 l Glasreaktor in 1100 ml entionisiertem Wasser gelöst. In diese Lösung werden 267 g Saat (wie in Beispiel 1 beschrieben) dispergiert, danach innerhalb von 10 min eine Mischung aus 116 g Styrol, 24 g Divinylbenzol und 9 g Dibenzoylperoxid dosiert und anschließend 20 min gerührt. Danach wird innerhalb von 20 min eine Mischung aus 745 g Styrol und 49 g Divinylbenzol zudosiert und weitere 30 min gerührt. Nach dieser Zeit werden 120 ml einer 2 %igen wäßrigen Methylhydroxyethylcelluloselösung hinzugefügt. Der Ansatz wird durch Temperaturerhöhung auspolymerisiert, abgekühlt, über ein 32 µm Sieb gewaschen und getrocknet. Man erhält 1150 g eines regelmäßig geformten Perlpolymerisates einer mittleren Teilchengröße von 370 µm.

### Beispiel 4 Herstellung eines Perlpolymerisates

Analog Beispiel 2 wird 9,3 g Dinatriumhydrogenphosphatdodekahydrat anstatt Borsäure und Natriumhydroxid eingesetzt. Man erhält 1150 g eines regelmäßig geformten Perlpolymerisates einer mittleren Teilchengröße von 370 µm.

### Beispiel 5 Herstellung eines Perlpolymerisates

Analog Beispiel 2 werden 120 ml einer 2 %igen wäßrigen Methylhydroxyethylcelluloselösung anstatt der Methylhydroxypropylcelluloselösung eingesetzt. Man erhält 1150 g eines regelmäßig geformten Perlpolymerisates einer mittleren Teilchengröße von 370 µm.

### Beispiel 6 Herstellung eines stark sauren Kationenaustauschers

In einem 3 l Planschliffgefäß werden 250 g des Perlpolymerisates aus Beispiel 1 in 750 ml 98 %iger Schwefelsäure eingerührt. Das Gemisch wird unter Rühren innerhalb 100 min auf 90°C erhitzt, anschließend innerhalb 4 h auf 100°C erhitzt und danach ohne weitere Energiezufuhr 3 h gerührt. Anschließend wird der Ansatz in eine Glassäule überführt, mit Schwefelsäure abnehmender Konzentration und anschließend mit entionisiertem Wasser gewaschen (mittlere Teilchengröße 555 µm).
- Ausbeute:: 4,3 ml Ionenaustauscher/g Perlpolymerisat
- Totalkapazität:: 1,87 eq/l

### Beispiel 7 Herstellung eines stark sauren Kationenaustauschers

In einem 3 l Planschliffgefäß werden 750 ml 98 %ige Schwefelsäure auf 100°C erhitzt. Bei dieser Temperatur werden 250 g des Perlpolymerisates aus Beispiel 1 in 10 Portionen innerhalb von 4 h hinzugegeben und weitere 3 h bei dieser Temperatur gerührt. Anschließend wird der Ansatz in eine Glassäule überführt, mit Schwefelsäure abnehmender Konzentration und anschließend mit entionisiertem Wasser gewaschen (mittlere Teilchengröße 555 µm).
- Ausbeute:: 4,3 ml Ionenaustauscher/g Perlpolymerisat
- Totalkapazität:: 1,87 eq/l

### Beispiel 8 Herstellung eines stark basischen Anionenaustauschers

Das Perlpolymerisat aus Beispiel 3 wird nach dem in der US-PS 3 989 650 beschriebenen Verfahren durch Amidomethylierung mit Essigsäurephthalimidomethylester, alkalische Verseifung und Quaternierung mit Chlormethan in einen stark basischen Anionenaustauscher überführt (mittlere Teilchengröße 550 µm).
- Totalkapazität:: 1,37 eq/l

### Beispiel 9 Chlormethylierung eines Perlpolymerisates

In einem 3 l Sulfierbecher wird eine Mischung aus 1600 g Monochlordimethylether, 165 g Methylal und 5 g Eisen(III)chlorid vorgelegt und anschließend 300 g Perlpolymerisat aus Beispiel 2 zugegeben. Das Perlpolymerisat wird 30 min bei Raumtemperatur gequollen und in 3 h auf Rückflußtemperatur (55°C) erhitzt. Anschließend rührt man weitere 1,75 h unter Rückfluß nach. Während der Reaktionszeit werden ca. 275 g Salzsäure und leichtsiedende Organika abgetrieben. Anschließend wird die dunkelbraune Reaktionssuspension abfiltriert, das Chlormethylat mit einer Mischung aus Methylal und Methanol und anschließend mit Methanol intensiv gewaschen. Man erhält 680 g methanolfeuchtes, chlormethyliertes Perlpolymerisat.
- Chlorgehalt:: 18,7 %

### Beispiel 10 Herstellung eines stark basischen Anionenaustauschers

631 ml des methanolfeuchten, chlormethylierten Perlpolymerisates aus Beispiel 9 werden im 3 l Autoklaven vorgelegt und die Mutterlauge vollständig abgesaugt. Anschließend werden 909 ml entionisiertes Wasser und 298 g Trimethylamin (45 %ig) unter Rühren hinzugefügt. Die Reaktionsmischung wird auf 70°C erhitzt, 3 h bei 70°C gerührt, auf Raumtemperatur abgekühlt und die Flüssigkeit abgesaugt. Das Harz wird mit 800 ml entionisiertem Wasser versetzt und über einem Sieb mit entionisiertem Wasser gewaschen. Man erhält 1480 ml eines stark basischen Anionenaustauschers (mittlere Teilchengröße 550 µm).
- Totalkapazität:: 1,37 mol/l

### Beispiel 11 Herstellung eines schwach basischen Anionenaustauschers

210 ml des chlormethylierten Perlpolymerisates aus Beispiel 9 werden im 3 l Autoklaven vorgelegt und die Mutterlauge vollständig abgesaugt. Anschließend werden 357 ml entionisiertes Wasser, 8,9 g Natriumchlorid und 68 g Dimethylaminoethanol (99 %ig) unter Rühren hinzugegeben. Die Reaktionsmischung wird auf 100°C erhitzt, 7 h bei 100°C gerührt, auf Raumtemperatur abgekühlt und die Mutterlauge abgesaugt. Das Harz wird mit 800 ml entionisiertem Wasser versetzt und über einem Sieb mit entionisiertem Wasser gewaschen. Man erhält 460 ml eines schwach basischen Anionenaustauschers (mittlere Teilchengröße 550 µm).
- Totalkapazität:: 1,31 mol/l

## Patentansprüche

1. Verfahren zur Herstellung von vernetzten Polymerisaten nach dem seed/feed-Verfahren, **dadurch gekennzeichnet, dass** man als Saat ein mikroverkapseltes vernetztes Polymerisat einsetzt.

2. Verfahren gemäß Anspruch 1, **dadurch gekennzeichnet, dass** man als Saat ein durch Komplexkoazervation oder Phasengrenzflächenreaktion erhaltenes mikroverkapseltes vernetztes Polymerisat einsetzt.

3. Verfahren gemäß Anspruch 1, **dadurch gekennzeichnet, dass** man als Saat ein durch Komplexkoazervation mittels Gelatine und Alkalisulfat mikroverkapseltes vernetztes Polymerisat einsetzt.

4. Verfahren gemäß Anspruch 3, **dadurch gekennzeichnet, dass** als Alkalisulfat Natriumsulfat eingesetzt wird.

5. Verfahren gemäß den Ansprüchen 1 bis 4, wonach das als Saat eingesetzte Polymerisat ein Perlpolymerisat ist.

6. Verfahren gemäß den Ansprüchen 1 bis 4, wonach das als Saat eingesetzte Polymerisat ein vernetztes Styrolpolymerisat ist.

7. Verfahren nach Anspruch 6, wonach das als Saat eingesetzte Polymerisat ein mit Divinylbenzol vernetztes Polymerisat ist.

8. Verfahren nach Anspruch 1, wonach der Zulauf der feed-Monomeren bei Polymerisationsbedingungen erfolgt.

9. Verfahren nach Anspruch 1, wonach man zunächst die Saat mit einer Mischung aus Monomer und Polymerisationsinitiator quillt und anschließend ein zweites Monomer ohne Polymerisationsinitiator bei Polymerisationsbedingungen zusetzt.

10. Verfahren zur Herstellung von Ionenaustauschern durch Funktionalisierung der nach Verfahren gemäß Ansprüchen 1 bis 9 erhältlichen Polymerisate.

11. Verfahren gemäß Anspruch 10, **dadurch gekennzeichnet, dass** man Anionenaustauscher durch Haloalkylierung, Kationenaustauscher durch Sulfonierung oder Chelatharze durch Aminierung und Umsetzen mit Carboxylgruppen-haltigen Verbindungen herstellt.

12. Anionenaustauscher, erhältlich durch Haloalkylierung der gemäß der Ansprüche 1 bis 9 erhältlichen vernetzten mikroverkapselten Polymerisate.

13. Kationenaustauscher erhältlich durch Sulfonierung der gemäß der Ansprüche 1 bis 9 erhältlichen vernetzten mikroverkapselten Polymerisate.

14. Chelatharze erhältlich durch Aminierung und Umsetzen mit Carboxylgruppen-haltigen Verbindungen der durch die Ansprüche 1 bis 9 erhältlichen vernetzten mikroverkapselten Polymerisate.

15. Chelatharze erhältlich durch Umsetzen der gemäß Anspruch 12 erhaltenen haloalkylierten Polymerisate mit einer Aminosäure oder mit einem Aminopyridin.

## Claims

1. Process for the preparation of crosslinked polymers by the seed/feed process, **characterized in that** the seed used is a microencapsulated crosslinked polymer.

2. Process according to Claim 1, **characterized in that** the seed used is a microencapsulated crosslinked polymer obtained by complex coacervation or phase boundary reaction.

3. Process according to Claim 1, **characterized in that** the seed used is a crosslinked polymer microencapsulated by complex coacervation by means of gelatin and alkali metal sulphate.

4. Process according to Claim 3, **characterized in that** the alkali metal sulphate used is sodium sulphate.

5. Process according to Claims 1 to 4, in which the polymer used as seed is a bead polymer.

6. Process according to Claims 1 to 4, in which the polymer used as seed is a crosslinked styrene polymer.

7. Process according to Claim 6, in which the polymer used as seed is a polymer crosslinked with dibinylbenzene.

8. Process according to Claim 1, in which the feed monomers are fed in under polymerization conditions.

9. Process according to Claim 1, in which first the seed is swollen with a mixture of monomer and polymerization initiator and then a second monomer without polymerization initiator is added under polymerization conditions.

10. Process for the preparation of ion exchangers by functionalization of the polymers obtainable by processes according to Claims 1 to 9.

11. Process according to Claim 10, **characterized in that** anion exchangers are prepared by haloalkylation, cation exchangers by sulphonation or chelate resins by amination and reaction with compounds containing carboxyl groups.

12. Anion exchanger obtainable by haloalkylation of the crosslinked microencapsulated polymers obtainable according to Claims 1 to 9.

13. Cation exchanger obtainable by sulphonation of the crosslinked microencapsulated polymers obtainable according to Claims 1 to 9.

14. Chelate resin obtainable by amination of the crosslinked microencapsulated polymers obtainable by Claims 1 to 9 and reaction with compounds containing carboxyl groups.

15. Chelate resin obtainable by reaction of the halo-alkylated polymers obtained according to Claim 12 with an amino acid or with an aminopyridine.

## Revendications

1. Procédé de préparation de polymères réticulés par le procédé à germe et charge (*seed*/*feed*), **caractérisé en ce que** l'on utilise comme germe un polymère réticulé microencapsulé.

2. Procédé selon la revendication 1, **caractérisé en ce que** l'on utilise comme germe un polymère réticulé microencapsulé obtenu par coacervation de complexe ou réaction interfaciale.

3. Procédé selon la revendication 1, **caractérisé en ce que** l'on utilise comme germe un polymère réticulé microencapsulé par coacervation de complexe à l'aide de gélatine et d'un sulfate de métal alcalin.

4. Procédé selon la revendication 3, **caractérisé en ce que** l'on utilise du sulfate de sodium comme sulfate de métal alcalin.

5. Procédé selon les revendications 1 à 4, dans lequel le polymère utilisé comme germe est un polymère en perles.

6. Procédé selon les revendications 1 à 4, dans lequel le polymère utilisé comme germe est un polymère de styrène réticulé.

7. Procédé selon la revendication 6, dans lequel le polymère utilisé comme germe est un polymère réticulé avec du divinylbenzène.

8. Procédé selon la revendication 1, dans lequel l'introduction des monomères de charge s'effectue dans des conditions de polymérisation.

9. Procédé selon la revendication 1, dans lequel on fait d'abord gonfler le germe avec un mélange de monomère et d'amorceur de polymérisation, puis on ajoute un deuxième monomère sans amorceur de polymérisation dans des conditions de polymérisation.

10. Procédé de préparation d'échangeurs d'ions par fonctionnalisation des polymères pouvant être obtenus par un procédé selon les revendications 1 à 9.

11. Procédé selon la revendication 10, **caractérisé en ce que** l'on prépare des échangeurs d'anions par halogénoalkylation, des échangeurs de cations par sulfonation ou des résines chélatantes par amination et réaction avec des composés contenant des groupes carboxyle.

12. Échangeurs d'anions pouvant être obtenus par halogénoalkylation des polymères microencapsulés réticulés pouvant être obtenus selon les revendications 1 à 9.

13. Échangeurs de cations pouvant être obtenus par sulfonation des polymères microencapsulés réticulés pouvant être obtenus selon les revendications 1 à 9.

14. Résines chélatantes pouvant être obtenues par amination et réaction avec des composés contenant des groupes carboxyle des polymères microencapsulés réticulés pouvant être obtenus selon les revendications 1 à 9.

15. Résines chélatantes pouvant être obtenues par réaction des polymères halogénoalkylés obtenus selon la revendication 12 avec un aminoacide ou une aminopyridine.
